# EUROPEAN PATENT SPECIFICATION

(11) **EP 1 003 139 B1**
(45) Date of publication and mention of the grant of the patent: **16.07.2008**
(21) Application number: 00200558.5
(22) Date of filing: 30.04.1998
(51) Int. Cl.: G06Q 20/00, G07F 7/08

(54) **System and method for loading a stored-value card.**
System und Verfahren zum Laden einer Speicherwertkarte
Système et méthode de rechargement d'une carte à valeur stockée

(30) Priority: 30.04.1997 US 45883 P; 16.10.1997 US 951614
(43) Date of publication of application: 24.05.2000
(62) Divisional of application: 98920079.5
(73) Proprietor: VISA INTERNATIONAL SERVICE ASSOCIATION, Foster City, CA 94404 (US)
(72) Inventor: Davis, Virgil M., Los Altos, CA 94024 (US); Cutino, Suzanne C., San Francisco, CA 94107 (US); Berg, Michael J., Belmont, CA 94002 (US); Conklin, Fredrick Sidney, Oakland, CA 94602 (US); Pringle, Steven John, Oakland, CA 94618 (US)
(74) Representative: Finnie, Peter John

(56) References cited:
- WO-A-94/28498
- WO-A-96/04618
- WO-A-96/32701
- WO-A-96/41286
- WO-A-97/10562

## Description

### Field of the Invention

The present invention relates generally to a value loading system using a computer network. More specifically, the present invention relates to a a value loading system for a smart card using an open network such as the Internet.

### Background to the Invention

With the explosive growth in open networks (such as the Internet) over the past several years and the rapid increase in the number of consumers with access to the World Wide Web, there has been a great deal of interest in the development of electronic commerce on the Internet. Traditional financial transactions are being transformed.

A variety of service providers have introduced payment schemes to support the purchase of goods or services on-line in a virtual merchant environment. These approaches have used several models based on traditional payment methods existing in the face-to-face retail market, including credit/debit cards, checks and cash. However, for a variety of reasons, various of these numerous schemes have particular drawbacks.

Currently, a consumer may use his or her traditional credit or debit card to make a purchase over the Internet. A consumer simply supplies his card account number which is then transmitted across the Internet to a merchant and the payment transaction is completed in the traditional manner for a credit card. Often, these account numbers are transmitted over the Internet with extremely limited or no security. Security can be improved through use of the "Secure Electronic Transaction" protocol published by Visa International and Mastercard in 1996. These transactions still require some form of card validation and performance of a balance check. These checks are performed on-line between the merchant, an acquirer and an issuing bank, a process which can become time consuming and inefficient when the value of the transaction is low, or when a number of small value transactions will be taking place in a short time span.

The electronic check is modeled on the paper check, but is initiated electronically using digital signature and public cryptography. Deposits are gathered by banks via electronic mail and cleared through existing channels such as the Automated Clearing House (ACH). However, use of such an electronic check by a consumer has various drawbacks. For one, digital signatures and public encryption necessitate use of a certifying authority adding additional entities and "net" trips to the transaction. Also, cardholder registration is needed.

Other Internet payment alternatives are modeled on cash transactions and include a variety of schemes. With CyberCash, the consumer appends his credit card number to an electronic invoice received from the merchant, returns the credit card number to the merchant which is then processed and forwarded on to CyberCash where it is then treated like a normal credit card transaction. However, this technique suffers from some of the disadvantages discussed above with respect to traditional credit card transaction on the Internet and requires additional work by the merchant in processing the credit card number. Debit transactions may also be completed but require a consumer to open a CyberCash account in advance.

A digital, token-based system for Internet transactions has been implemented by DigiCash. With DigiCash, so-called "digital coins" are purchased from DigiCash from a prefunded deposit account and stored on the consumer's hard drive. These digital coins are then used for an Internet transaction with a merchant. This scheme has disadvantages in that the consumer must first set up a relationship with DigiCash and use a credit card or similar instrument to purchase these digital coins, which then must be downloaded to the consumer's computer. This transaction can be time consuming for the consumer and is subject to fraud. In addition, a merchant must be set up to not only accept these digital coins, but also to verify their authenticity, to confirm the transaction, and then finally to forward these numbers on to his bank in order to finally get paid. One drawback from the merchant's point of view is that much of the transaction work must be performed by the merchant.

Another scheme for completing an Internet transaction is offered by First Virtual Holding, Inc. First Virtual offers a software solution based upon a unique identification number and electronic mail confirmation. To use this scheme, a consumer opens a special account with First Virtual and then receives a confidential identification number. When the consumer wishes to purchase a product or service over the Internet, he or she sends an electronic mail message containing the confidential identification number to the merchant. The merchant then sends the number to First Virtual by electronic mail for verification and identification of the customer. First Virtual then confirms with the consumer by electronic mail that the consumer did indeed initiate the transaction and wishes to make the purchase. There are drawbacks to this scheme in that the consumer must first open a special account with First Virtual. Also, the merchant must communicate with First Virtual to identify the customer and to identify the customer's credit card account number that is identified by the confidential identification number.

Aside from payment schemes over the Internet, a technique in use for performing a financial transaction at a stand-alone terminal uses a smart card. A smart card is typically a credit card-sized plastic card that includes a semiconductor chip for holding the digital equivalent of cash directly, instead of pointing to an account or providing credits. When a card of this kind is used to make a purchase, the digital equivalent of cash is transferred to the merchant's "cash register" and then to a financial institution. Stored-value cards are either replenishable (value can be reloaded onto the card using a terminal) or non-replenishable (the card is decremented in value for each transaction and thrown away when all its value is gone).

Physically, a smart card often resembles a traditional "credit" card having one or more semiconductor devices attached to a module embedded in the card, providing contacts to the outside world. The card can interface with a point-of-sale terminal, an ATM, or a card reader integrated into a telephone, a computer, a vending machine, or any other appliance. A microcontroller semiconductor device embedded in "processor" smart card allows the card to undertake a range of computational operations, protected storage, encryption and decision making. Such a microcontroller typically includes a microprocessor, memory, and other functional hardware elements. Various types of cards are described in "The Advanced Card Report: Smart Card Primer", Kenneth R. Ayer and Joseph F. Schuler, The Schuler Consultancy, 1993.

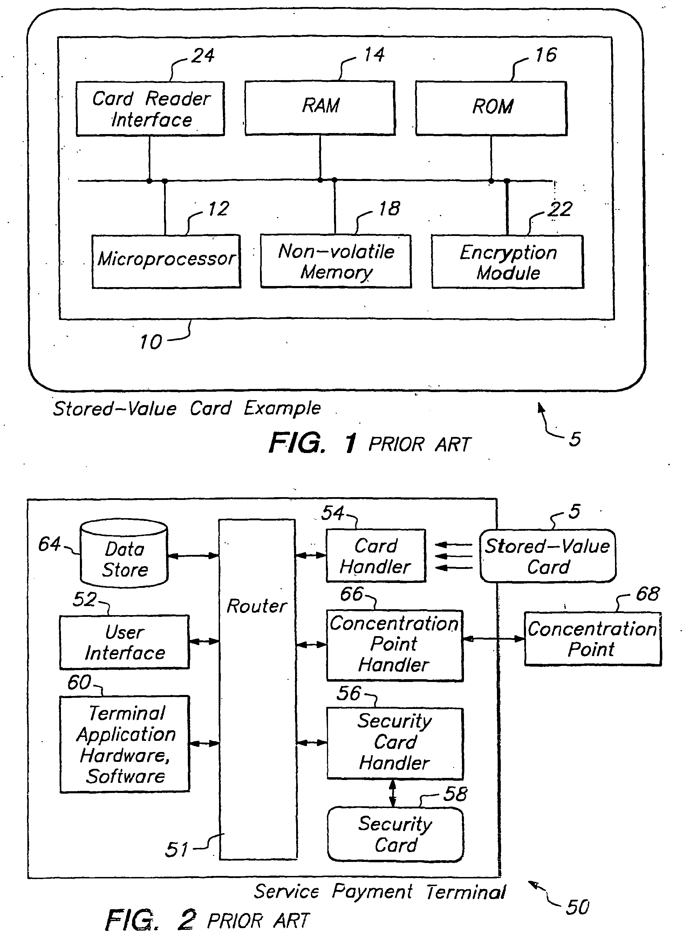

One example of a smart card implemented as a processor card is illustrated in FIG. 1. Of course, a smart card may be implemented in many ways, and need not necessarily include a microprocessor or other features. The smart card may be programmed with various types of functionality, such as a stored-value application; credit/debit; loyalty programs, etc. For the purpose of this disclosure, card 5 is programmed at least with a stored-value application, and will be referred to as "stored-value" card 5.

Stored-value card 5 has an embedded microcontroller 10 that includes a microprocessor 12, random access memory (RAM) 14, read-only memory (ROM) 16, non-volatile memory 18, an encryption module 22, and a card reader interface 24. Other features of the microcontroller may be present but are not shown, such as a clock, a random number generator, interrupt control, control logic, a charge pump, power connections, and interface contacts that allow the card to communicate with the outside world.

Microprocessor 12 is any suitable central processing unit for executing commands and controlling the device. RAM 14 serves as storage for calculated results and as stack memory. ROM 16 stores the operating system, fixed data, standard routines, and look up tables. Non-volatile memory 18 (such as EPROM or EEPROM) serves to store information that must not be lost when the card is disconnected from a power source but that must also be alterable to accommodate data specific to individual cards or any changes possible over the card lifetime. This information might include a card identification number, a personal identification number, authorization levels, cash balances, credit limits, etc. Encryption module 22 is an optional hardware module used for performing a variety of encryption algorithms. Card reader interface 24 includes the software and hardware necessary for communication with the outside world. A wide variety of interfaces are possible. By way of example, interface 24 may provide a contact interface, a close-coupled interface, a remote-coupled interface, or a variety of other interfaces. With a contact interface, signals from the microcontroller are routed to a number of metal contacts on the outside of the card which come in physical contact with similar contacts of a card reader device.

One possible use of a stored-value card by a consumer is illustrated in FIG. 2. FIG. 2 illustrates a block diagram of a customer operated service payment terminal 50. A customer typically uses such a service payment terminal in a face-to-face environment in order to purchase goods in a store or directly from the terminal itself. Service payment terminal 50 can be an attended device or it can be integrated into a self-service device such as a vending machine or public telephone. For example, the service payment terminal may be incorporated into a soda machine in order to dispense sodas to a customer in which the customer pays by inserting the stored-value card. Or, the service payment terminal may be a point-of-sale terminal such as is found at a checkout counter where a customer inserts his stored-value card in order to purchase goods.

Service payment terminal 50 includes a router 51, a user interface 52, a card handler/reader 54, a security card handler 56, a security card 58, a terminal application 60, a data store 64 and a concentration point handler 66. Router 51 is hardware and software for routing information between functional blocks. User interface 52 controls the status of displays on the terminal and supplies instructions to the user. For example, the user interface provides instructions relating to insertion of stored-value card 5 or security card 58. Also, the user interface provides instructions and/or buttons for the customer to interact with terminal application 60 in order to purchase goods and/or services. Card handler 54 provides a physical card reader and associated software for accepting and communicating with stored-value card 5. Similarly, security card handler 56 provides a card reader and associated software for communicating with security card 58. In conjunction with security card handler 56, security card 58 controls the command sequence of the terminal and provides transaction and a batch security.

Terminal application 60 receives commands and information about the transaction and initiates the actual purchase. In addition, terminal application 60 is responsible for all application specific functionality such as guiding the customer through the use of the terminal via a display, and for providing all hardware and software needed to provide the user with a good and/or service once it has been informed by the security card that an appropriate value has been deducted from the stored-value card.

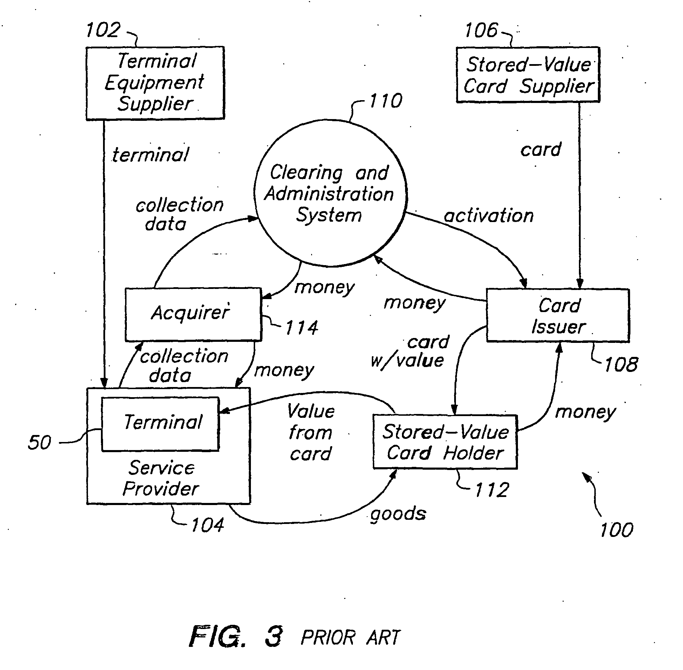

Data store 64 controls the storage of purchase transactions and totals. Concentration point handler 66 controls the sending and receiving of information to and from a concentration point. Concentration point 68 is a staging computer that communicates with any number of service payment terminals to collect batches of transactions. The concentration point then sends these transaction batches to a clearing and administration system for processing (such as in FIG. 3). Once processed, batch acknowledgments, along with other system updates are sent to the terminals via the concentration point. The concentration point ensures a successful transfer of data between service payment terminals and the clearing and administration system, and prevents overloading of the clearing and administration system. The service provider contracts with a concentration point for collection of the service payments. The concentration point may also be an existing central facility such as a telephone company that collects its own payments from card telephones.

Such a service payment terminal 50 allows a customer to use a stored-value card for the payment of goods and/or services, generates a payment result from a transaction, and bundles individual payment results into a collection for transfer to a clearing and administration system, which then transfers funds that had been debited from a customer's stored-value card to the merchant whose goods and/or services had been purchased from the terminal.

FIG. 3 illustrates an environment 100 useful for issuing stored-value cards and reconciling transactions performed with such a card. A terminal supplier 102 builds the equipment used by a service provider 104 to provide goods and/or services to customers having a stored-value card at a service payment terminal 50. Card Supplier 106 contracts with an integrated circuit manufacturer and a card manufacturer for integrated circuits and plastic card bodies, then embeds the integrated circuits into the cards and initializes them with a serial number. It then delivers the cards to card issuer 108. In conjunction with clearing and administration system 110 (such as a system provided by Visa International of Foster City, CA), card issuer 108 personalizes new cards and then transfers these cards to individuals (cardholders 112). The cardholder may then charge the card with value prior to use. Alternatively, the card may come with value already loaded. The cardholder 112 may then use the card at a service payment terminal 50 to purchase goods and/or services from service provider 104. Terminal 50 then debits the value from the card, thus creating a service payment.

Periodically, all transactions are sent in a data file from terminal 50 via concentration point 68 and an acquirer 114 to clearing and batch administration system 110 along with accumulated service payment batches from other terminals. Based upon this collection data, clearing and administration system 110 then receives money from card issuer 108 which had originally come from cardholder 112. Clearing and administration system 110 then transfers a lump sum to acquirer 114 using a suitable settlement service (such as one provided by Visa International) to pay the various service providers having a relationship with acquirer 114. Based upon the previous collection data, acquirer 114 then transfers an appropriate amount of money to each service provider 104 reflecting the value of the goods and/or services that that service provider had provided that day to cardholders based upon deductions from their stored-value cards.

Although such a service payment terminal described above is useful for the on-site purchase of goods by a consumer with a smart card, it does not permit the purchase of goods and/or services by a customer over a network. Nor does such a terminal permit the immediate transfer of electronic information to a consumer's computer. Service payment terminals are typically specially-designed units of hardware and software located at a merchant site. Furthermore, the service payment terminal is designed to integrate into one hardware location the functions of the terminal application (providing goods and/or services), a card handler for the stored-value card, and the transaction management embodied in the security card. Such a design is not suitable for transactions where a customer may wish to perform a transaction from almost any location (including the home or office) quickly and easily with a minimum of prearranged set-up and expense. Furthermore, although various Internet payment schemes have been suggested, they are not oriented toward small value transactions, and do not allow the use of a smart card for transactions over the Internet.

Thus, it would be desirable to have an architecture and system that would allow a consumer to quickly and easily perform transactions over an open network such as the Internet using a smart card. It is also desirable to have an architecture and system in which a user may use a smart card for both purchases over the Internet as well as purchases at existing service payment terminals.

However, in order to purchase, the card must be loaded with value first. Value can be loaded onto a stored-value card in a variety of ways. Currently, it is inconvenient for a user to load value onto his or her stored-value card. A user must physically travel to a bank or other institution that has an automated teller machine (ATM) or other similar device in order to load value on to his or her stored-value card. The user can insert money into the machine and have a corresponding value put onto the stored-value card, the user can use a debit card to deduct value from the user's account at the bank for transfer to the card, or a credit card can be used as the source of funds to be transferred to the stored-value card. In either case, the user must travel to the bank to load value. Further creating difficulty is that not all banks or other financial institutions have such a machine for loading value onto a user's stored-value card.

Accordingly, it would also be desirable to have a technique to allow a user to conveniently and easily load value onto a stored-value card.

International patent application W0 94/28498 describes a system and method for revaluation of smart cards using a public telephone network.

### Summary of the Invention

To achieve the foregoing, an architecture and system is disclosed that enables a smart card to be loaded with value on-line over an open network such as the Internet.

In a first aspect of the present invention, a loading technique allows the consumer to conveniently load value on to his or her stored-value card from any suitable device via an open network such as the Internet. A consumer is allowed to use any suitable computer at the home, office or elsewhere in order to connect to his bank or other financial institution. Using appropriate message integrity, value is transferred from the bank to the consumer's stored-value card. At the same time, the corresponding value is transferred from the bank to the stored-value card issuer through existing networks for later settlement with a merchant from whom the consumer purchases goods or services. Advantageously, this embodiment makes use of an existing clearing and administration system for eventual settlement of the transaction between the merchant and the card issuer. Also, the transaction is fully auditable and a log of previous transactions is stored on the card for later display. Thus, a consumer may conveniently load value on to his or her card while a high level of security is maintained and the card issuer can take advantage of unspent funds on the card.

From the consumer's perspective, the present invention operates in a fashion similar to loading a stored-value card at an ATM machine, except that the consumer need not insert cash or an additional debit or credit card, nor need travel to a bank. The loading functionality is distributed across the Internet between the card reading device located where the customer is, a bank server holding the consumer's account, and a load server with a host security module that provides security. All of these entities may be physically remote from one another with router functionality being provided by the Internet.

Furthermore, a bank need only make a minimal investment in time and money to take advantage of the present invention in order to allow its customers to load value from their existing accounts over the Internet. The bank need not engage in the development of complex custom software or accounting procedures. By incorporating software libraries, a bank is ready to begin loading value onto its customer's cards from its web site. Preferably, libraries are provided that interface with an existing server at a bank to facilitate the building of an HTML page. Because a smart card with a stored-value application is used, the bank server, load server and client terminal perform the details of the transaction and the bank itself is relieved from having to control and keep track of a transaction. Also, the load server and stored-value card manage and provide security for the transaction. I.e., the bank need not be concerned about security nor be responsible for authenticating a stored-value card nor for determining a balance on the card.

The load server and its security module is provided by a separate financial institution or by a third-party processor.

The present invention provides benefits to issuers and acquirers. Expansion of the functionality for a stored-value card increases revenue opportunities from cardholders and merchants. Also, there may be new merchant marketing opportunities for acquirers. The present invention also offers a micro-payment solution for electronic commerce without the need to introduce a separate product or brand or to establish new service provider relationships. In addition, in one specific embodiment of the invention, funds that are loaded onto a card are transferred from the loading bank to the card issuer so that the issuer may take advantage of the funds on the card until they are spent.

A further advantage of the present invention is its ability to minimize transaction traffic on the Internet and to minimize the amount of time that a security card (or a security module) is tied up with one transaction. In the payment aspect, by emulating security card commands issued to a stored-value card, a client terminal is able to receive and group responses for transmission to a payment server all at once, rather than one-by-one over the Internet. The payment server is then able to emulate a stored-value card as it interacts with the security card in delivering the responses to the security card. The result is less message traffic over the Internet, saving time and interrupts.

Also, by delivering an expected stored-value card signature to the payment server, the security card is relieved from having to compare the signatures itself, and may release sooner and move on to a new transaction. The payment server may also deliver the expected stored-value card signature to the client terminal or merchant server for comparison, thus reducing to one round trip the message traffic between the payment server and the client terminal.

The present invention is suitable for use with any type of stored-value card that is able to store an amount and to decrement a value upon a command. In one embodiment of the invention, a stored-value card implemented as a processor card works well. Use of a processor card has advantages where information processing is done on the card rather than in the terminal or host computer. Processor cards allow encryption to be done by the card, allow generation of signatures, and can accommodate multiple passwords or personal identification (such as biometrics that uniquely identify the holder of the card). Processor cards also provide increased data security, an anti-fraud capability, flexibility in applications, a multi-purpose capability, and off-line validation. Because high telecommunication costs and/or low reliability of a network may make on-line authorization impractical, a stored-value card with the capability for performing off-line processing and authentication by itself is extremely valuable.

### Brief Description of the Drawings

Examples of the present invention will now be described in detail with reference to the accompanying drawings, in which:
FIG. 1 is a block diagram of an example of a stored-value card useful in embodiments of the present invention;
FIG. 2 is a block diagram of a service payment terminal in which a stored-value card may be inserted to purchase merchandise;
FIG. 3 is a block diagram of an example of a clearing and administration system useful for reconciling financial transactions received from a service payment terminal;
FIG. 4 illustrates a system for loading value onto a stored-value card according to one embodiment of the present invention;
FIGS. 5A-5D are a flowchart describing the loading of a consumer's stored-value card using an embodiment of the present invention; and,
FIG. 6 is a block diagram of a typical computer system suitable for use in embodiments of the present invention.

### Detailed Description

The present invention separates the functionality involved in a transaction using a stored-value card in order to take advantage of the routing capabilities of the Internet.

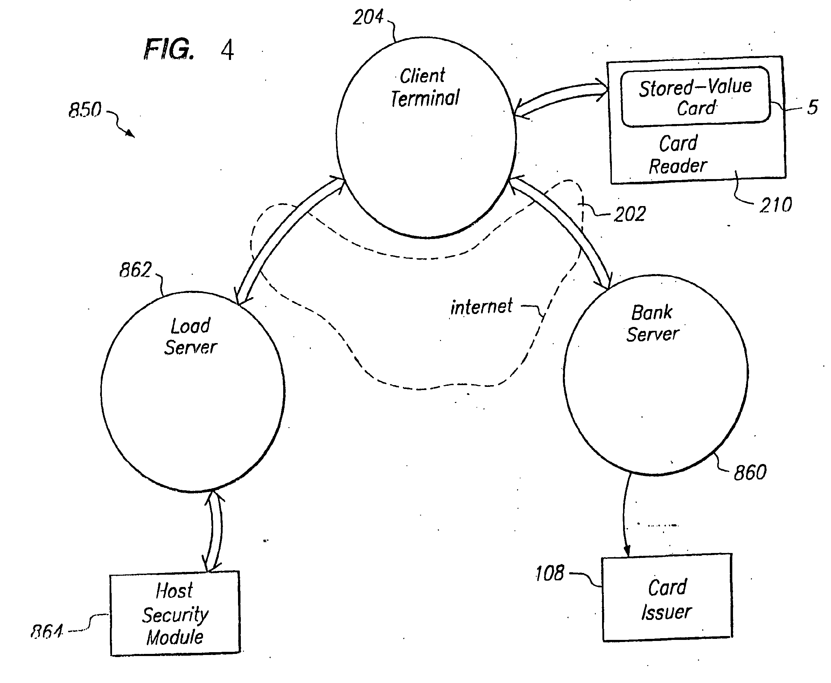

FIG. 4 illustrates a system 850 for loading value onto a stored-value card according to one embodiment of the present invention. System 850 includes a client terminal 204, bank server 860 and load server 862. Client terminal 204 communicates with card 5 via card reader 210, and with bank server 860 and load server 862 over any suitable open network such as Internet 202.

Preferably, each of client terminal 204, bank server 860 and load server 862 implement a code module (similar in operation to the code modules described above) in the Java programming language that provides the functionality described below. For simplicity of explanation, reference will be made below to "client terminal", "bank server" and "load server" even though the resident code is performing the functions. Card issuer 108 has been described previously in FIG. 3. Card issuer 108 may be a separate financial institution from the bank that includes bank server 860, or card issuer 108-may be the same bank that includes bank server 860.

Bank server 860 is any suitable computer within a bank or other financial institution. By way of example, bank server 860 is any suitable personal computer, a workstation or a mainframe computer. In one embodiment, bank server 860 runs a "servlet" program (a Java applet running on server) for communication with client 204.

Load server 862 is also any suitable computer and may be located at a third party location (such as at a processor). Load server 862 also runs a servlet program for communication with client terminal 204 and host security module 864.

Host security module (HSM) 864 is a device known in the art that may be embodied in a hardware "black box" or on any suitable computer. The host security module can be implemented in a hardware module outside of load server 862, can be implemented within load server 862, can be implemented in software, or can be implemented as a security card described above. Host security module 864 contains the encryption keys in hardware used for generating signatures (for example S1, S2 and S3) that provide security for the transaction. These signatures are used by stored-value card 5 and host security module 864 to insure that the card is not expired or counterfeit (i.e., is a valid card), to insure that module 864 is authentic, to insure that system 850 is authentic and, in general, to provide for a valid transaction and to prevent fraud. Card 5 also includes encryption keys for the generation of a stored-value card signature. In an alternative embodiment, module 864 could be replaced by a standard terminal that includes a security card such as is shown in the previous embodiments. In this situation, the encryption keys would be stored in the security card.

Briefly, system 850 operates as follows. A consumer accesses bank server 860 via client terminal 204. Assuming that card 5 is not overloaded and that the user's account with the bank has sufficient funds, the user is able to download value via bank server 860 on to his stored-value card 5. Client terminal 204 communicates with load server 862 to receive authorization for the load and for higher security. Card 5 may then be used to make purchases over the Internet as described earlier in the application or may be used for purchases elsewhere. Once the bank has downloaded value to card 5, a corresponding amount of funds is transferred from the bank to card issuer 108.

Card issuer 108 places these funds in a holding pool. Once stored-value card 5 is used to make a purchase from a merchant, the transaction is captured and settled through a settlement service, such as VisaNet. The issuer bank decrements the funds pool for the amount of the purchase, which is paid to the merchant bank. The merchant bank pays the merchant for the transaction. Settlement may occur in any suitable fashion such as is known in the art and, in particular, may be implemented as previously described in FIG. 3.

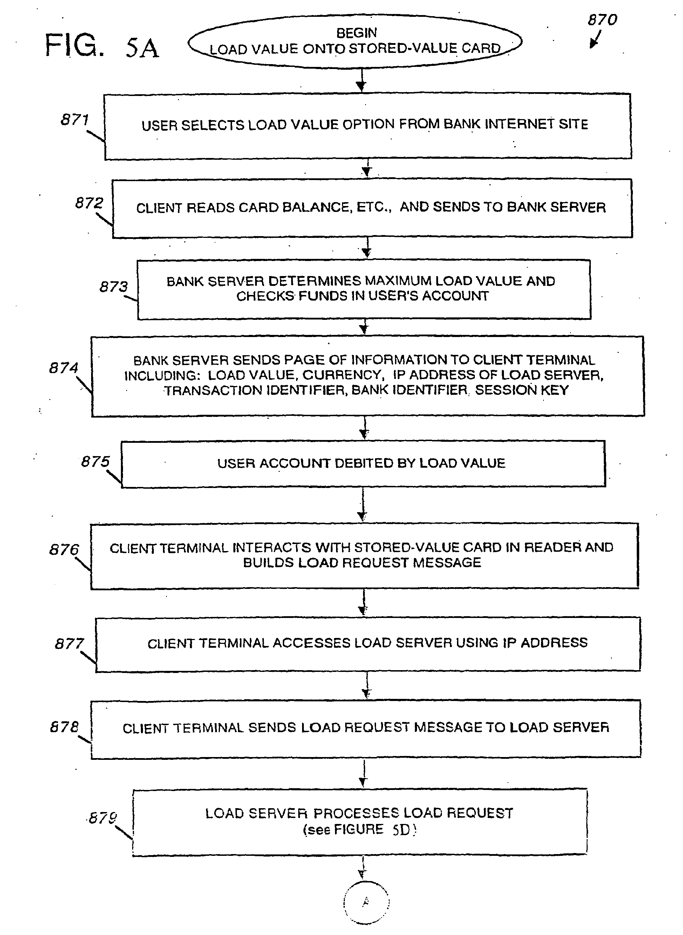

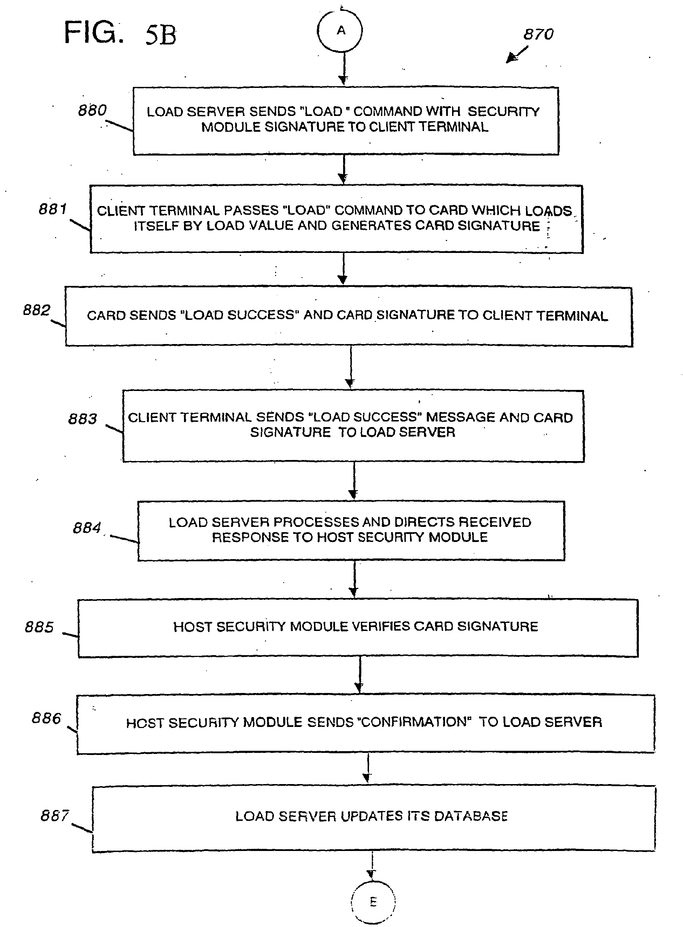

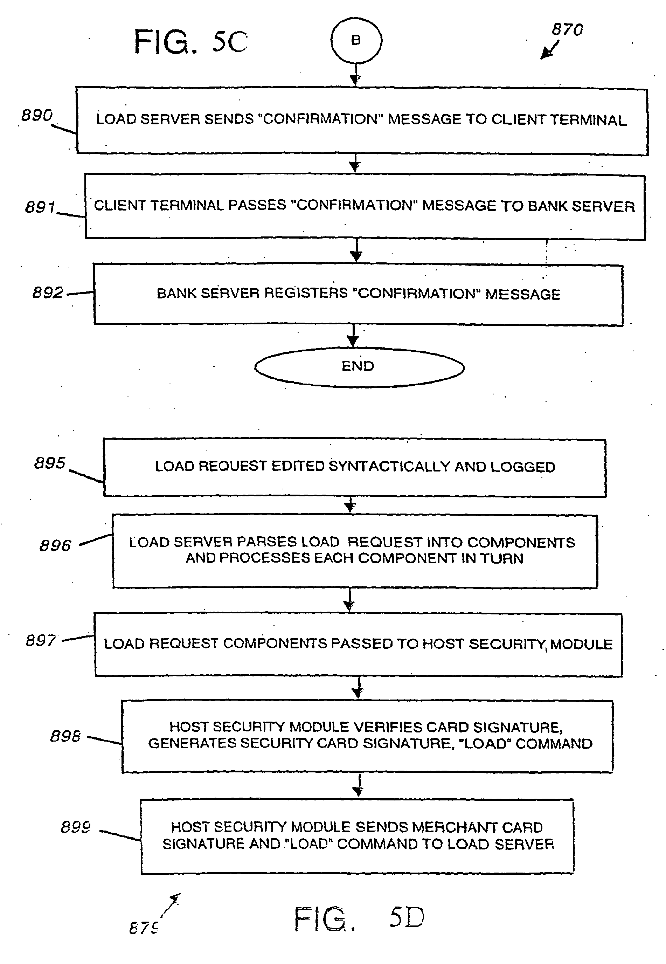

One embodiment of a technique by which a stored-value card is loaded over the Internet will now be described using the flowchart of FIGS. 5A through 5D with reference to FIG. 4. Various of the steps below may occur in a different order; the following description is for illustration purposes.

Certain implementation details mentioned above with respect to payment are equally applicable to loading a stored-value card. Furthermore, the exemplary flow shown in the figures illustrates a successful transaction (although a negative result is also explained below in the text). For this reason, a "confirmation" message is referred to, which can more broadly be referred to as a "result" message (to reflect both the possibilities of success and failure of a load). Also, a "load success" message is referred to, which can also be referred to as a "confirmation" message, to reflect its status as either confirming a positive load result or a negative load result.

Initially, a suitable web browser of client terminal 204 is used by the user to access a bank server Internet site. In step 871 the user selects an option to load value onto card 5. In step 872 the bank server sends a request for card information (including current card balance and maximum card balance); client terminal 204 reads the current card balance, currency, and other card information via card reader 210 and returns the balance to bank server 860. In step 873 the bank server determines the maximum load value and verifies that enough funds are in the user's account to accommodate a load request.

In step 874 the bank server builds an HTML page that includes the following client applet parameters: the load value; the type of currency being used; the port and IP address of the load server; a unique transaction identifier used by both the load server and the bank server to track a transaction; a unique bank identifier assigned to the bank and known to the load server; and a session key. Other information may also be included such as the currency's exponent, a status URL address of the bank server used for communication from the client terminal, and other security information to ensure the identity of the bank server and the integrity of the message. Other process related information such as software release level, encryption methodology and keys may also be conveyed. Once this page has been built, the page is sent to the requesting client browser and triggers the activation of the client code module (in this example a Java applet) in the client terminal.

To determine the load value, the bank server requests that the user enter the amount to load to the card. Assuming that the user's account is adequate, the bank server requests the user's account be debited in step 875 by the load value. Advantageously, the debit request from the bank server can use the existing ATM and accounting systems of the bank to debit the user's account. From the bank's point of view, value is being transferred from the user's account much in the same way that value would be transferred to a user in the form of cash at an ATM. In this situation, though, the value is not being dispensed as cash at an ATM, but is being sent over the Internet to a stored-value card.

In step 876 the client terminal interacts with stored-value card 5 to obtain card information in order to build a load request message for later transmission to load server 862. Once responses from the card are received, the client terminal combines these responses into a byte stream suitable for transmission over a network to a load server.

The client terminal emulates a variety of host security module 864 commands to receive responses from these commands from the stored-value card. The stored-value card and the security module are physically separated from one another; communication takes place over the Internet. In the interest of speed and reliability, it is advantageous to have only the traditional authentication, response, and confirmation messages exchanged.

To operate securely and reliably in this environment, in one embodiment of the present invention the client terminal emulates a security module and gathers all the responses for transmission into one load request message. The load request message may include a variety of information and preferably includes a first card signature (termed S1), a card number, an expiry date, and a load amount. Other information such as the security algorithm, transaction counter, current card balance, and bank server time stamp are also preferably provided.

As all of this information is prepackaged into a single load request message, the number of messages exchanged between the stored-value card and the security module over the Internet is minimized.

Next, in step 877 the client terminal accesses the load server using the IP address received from the bank server. In step 878 the client terminal sends the load request message to the load server. In step 879 the load server processes the load request in conjunction with an associated host security module 864-as will be-explained in greater detail below with reference to FIG. 5D. After step 879, the load server has received an issuer security module signature (termed S2) as part of a load command from the security module 864. The security module signature is a value that uniquely identifies and validates the security module to prove to stored-value card 5 that the incoming load command is a valid command from a real security module. Thus, the user of the stored-value card, and other interested parties are guaranteed that a valid load of the card has occurred. In a preferred embodiment of the invention, the security module signature is an encrypted value ensuring that no other entity can forge an identity of a security module.

In step 880 the load server sends the load command including with the security module signature to the client terminal for the stored-value card to load itself. In step 881, upon receiving the load command from the load server, the client terminal passes the load command to stored-value card 5 which verifies the signature, loads itself by the load value, and also generates a load success message, a second stored-value card signature (termed S3), and a result code indicating success or failure of the load. In a preferred embodiment of the invention, this signature is in encrypted form to prevent tampering.

In step 882, card 5 sends load success message containing the card signature (S3) and result code back to client terminal 204. Next, in step 883 client terminal 204 packages the load success message along with the card signature and sends them back to load server 862. In step 884 the load server receives the incoming message. The load server then processes the message into its components and directs the components to the security module. Next, in step 885 the security module may process this response from the client's terminal and verify the received stored-value card signature (S3).

As the security module contains the keys and algorithms necessary to compute stored-value card signatures, the security module is able to validate that a received stored-value card signature is in fact a valid one by comparing the received stored-value card signature with a generated expected value. A successful comparison indicates that a load success message received from the stored-value card is in fact a valid success message and that the stored-value card has been loaded. Assuming that the transaction is so far valid, in step 886 the security module sends a "confirmation" message back to the load server.

It is possible that the stored-value card has not been loaded by the proper amount, that the card is invalid, a user is fraudulent or another discrepancy. For example, it is possible that a user has tampered with the card to make it appear that a load has not occurred, when in fact a load has occurred. In this situation, processing in step 882 and on is slightly different. For example, instead of generating a "load success" message, the card my generate a "negative result" code, potentially indicating that the card has not been loaded. Processing of this situation would then occur as follows.

In step 882, card 5 sends a load message containing the result code and stored-value card signature S3 back to client terminal 204. Client terminal 204 recognizes a negative result code, and invokes negative result handling. Client terminal 204 interacts with card 5 and generates a new load request for a zero value load using elements from the original request, along with a new card signature S1.

The negative result code, along with the signatures S3 and new S1, and the zero value load request are passed to the load server for analysis. The load server determines if the transaction counter in the zero value load equals the transaction counter in the previous request, along with verifying other pertinent information such as date and time, card number, and currency code and exponent. If the transaction counters are the same, then it is possible that a valid negative result has been received, but it should be verified because the client is not trusted. If the counters are equal, the load server will hold the original S3 and will generate a new load request to the security module using data element values that would have been expected if the original transaction had failed. The new load request along with the new S1 is sent to the security module. The security module then compares the original S1 (from the original load request) to the new S1. If S1 is valid, then the original negative result is true and the security module generates a signature to confirm to the load server that there was no load. The original negative result from the card is then released to the security module to complete the original transaction. Processing would continue, but a user account would not be debited, and no settlement need occur because the card was, in fact, not loaded. If S1 is not valid, the negative response is not true and then the result code in the original request is changed to reflect a successful load and passed to the security module. Processing then continues reflecting that a load has occurred.

On the other hand, if the transaction counters are not the same, then it is still possible that a valid negative result has been received, but it should be verified because the client is not trusted. First, the load server decreases the transaction counter in the new load request to match that of the original. The request along with the new S1 is passed to the security module. The security module calculates its own new S1 based upon the modified new load request. If there is no match, it means that the negative result was in error and that the card had been loaded. Processing continues to reflect a loaded card. If there is a match, it means the negative result was correct and that the transaction counter had been increased by accident. The user account is not debited, and not settlement occurs.

Returning now to further processing, in step 887 the load server logs the response received from the security module and updates its database with the transaction identifier, the bank identifier, the load value, etc. In general, any of the plethora of information passing through the load server may be added to its database. Next, in step 890 the load server creates a confirmation message including the transaction identifier and sends this message to the client terminal in encrypted form. By sending this confirmation message in encrypted form, the confirmation message may be forwarded to the bank server by way of the client terminal without fear of tampering. As the confirmation message is encrypted, it would be difficult for the client terminal or another entity to forge a confirmation message and trick the bank server into thinking that a valid load had taken place.

In step 891 the client terminal forwards the confirmation message on to the bank server at the URL address previously received from the bank server. The client terminal may also post a message to the user informing that the load has been completed: The client terminal also logs confirmation of the load. In step 892 the bank server registers the confirmation message. The bank server calls a routine to decrypt the confirmation message. If the decrypted confirmation message is acceptable, the bank server determines a successful load has occurred. The confirmation message provides assurance to the bank that the user's card was in fact loaded with a particular value and prevents fraud. For example, a fraudulent user who tries to claim that his bank account was decremented and his card not loaded (and should thus receive moke money from the bank) would be thwarted because the confirmation message proves that the user's card was in fact loaded. Alternatively, the "confirmation" message may indicate that a load did not occur, in which case the account would not be debited, and no settlement would occur.

At this point a successful load of the user's card has occurred (assuming all is well). For example, if the user had requested $100, that amount has been decremented from the user's account at the bank, and $100 has been loaded onto the user's stored-value card. Preferably, at this point the amount loaded (in this example $100) is transferred from the bank to the stored-value card issuer preferably through an existing network. The $100 is transferred so that the card issuer may manage the float on these unspent funds until the user spends the $100. Once the $100 (or a smaller portion) has been spent with a merchant, the card issuer is then able to settle the transaction with the merchant using any suitable clearing and administration system. In alternative embodiment, the bank may retain the $100 and settle directly with the merchant. In another embodiment, the bank and the card issuer are the same financial institution, and the $100 may be shifted between parts of the organization or remain in place.

Returning now to a more detailed discussion of step 879, FIG. 5D describes a technique for processing a load request message in conjunction with a security module. Once the load request message is received by the load server, the load server parses it into the appropriate elements and passes a request to the security module as will be explained below. Alternatively, the load server can build a network message and switch the request to a remote authentication server. Or, a smart terminal could parse the message and pass responses to the security module.

In step 895 the load server edits the load request for syntactic correctness and logs the request as received. In step 896 the load server constructs a load request message. In step 897 the load server passes the load request to the security module to emulate a stored-value card interacting with the security module. The load server behaves as if a stored-value card were actually interacting in an ATM (for example) through a network to a host with a security module. In this fashion, the load request originating from the client terminal has been sent in prepackaged form over the Internet emulating a traditional interaction between the stored-value card in an ATM.

In step 898, the security module verifies the received stored-value card signature (S1) to prevent fraud. The security module generates its security module signature (termed S2) and the load command. The signature S2 will confirm to the client terminal and the stored-value card that the host security module is authentic and belongs to the issuer of the stored-value card. Additionally, S2 protects against a user trying to perform a fake load, keys out of synchronization, a counterfeit card, an expired card, etc. The security module then sends the signature and load command to the load server as indicated in step 899. At this point, step 879 ends and control returns to step 880.

In another embodiment of the loading technique, a consumer may wish to access any of a variety of Web servers in order to load frequent flyer miles, award points, etc., that he or she has accumulated. A technique for authentication and redemption of such "points" is described above. In the loading embodiment, a consumer has accumulated points through any of a variety of programs with airlines, restaurants, rental car companies, hotels, banks, credit or debit card issuers, telephone or other communication companies, etc. These points are stored by the particular airline, etc., that has issued them. The consumer wishes to load these points onto his or her stored-value card in order to redeem them elsewhere; thus receiving airline tickets, meals, car rental, overnight stays, prizes, awards, discounts, or other benefits. By accessing an Internet server associated with the particular program, the consumer is able to load his or her stored-value card in any of the embodiments described herein to receive the benefits of the program, much in the same way that currency is loaded.

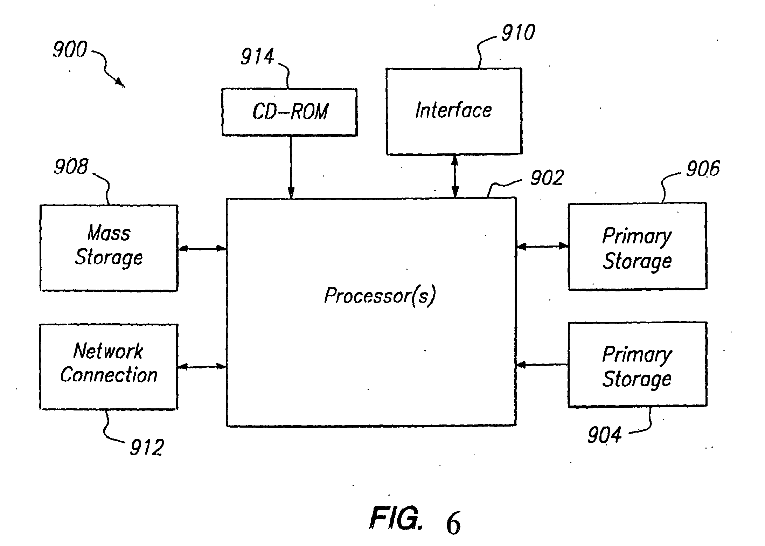

FIG. 6 illustrates a computer system 900 suitable for implementing an embodiment of the present invention. Computer system 900 includes any number of processors 902 (also referred to as central processing units, or CPUs) that are coupled to storage devices including primary storage 906 (such as random access memory, or RAM) and primary storage 904 (such as a read only memory, or ROM). As is well known in the art, primary storage 904 acts to transfer data and instructions uni-directionally to the CPU and primary storage 906 is used typically to transfer data and instructions in a bidirectional manner. Both of these primary storage devices may include any suitable of the computer-readable media described below. A mass storage device 908 is also coupled bi-directionally to CPU 902 and provides additional data storage capacity and may also include any of the computer-readable media described below. Mass storage device 908 may be used to store programs, data and the like and is typically a secondary storage medium (such as a hard disk) that is slower than primary storage. It will be appreciated that the information retained within mass storage device 908, may, in appropriate cases, be incorporated in standard fashion as part of primary storage 906 as virtual memory. A specific mass storage device such as a CD-ROM 914 passes data uni-directionally to the CPU.

CPU 902 is also coupled to an interface 910 that includes one or more input/output devices such as such as video monitors, track balls, mice, keyboards, microphones, touch-sensitive displays, transducer card readers, magnetic or paper tape readers, tablets, styluses, voice or handwriting recognizers, biometrics readers, or other computers. CPU 902 optionally may be coupled to another computer or telecommunications network using a network connection as shown generally at 912. With such a network connection, it is contemplated that the CPU might receive information from the network, or might output information to the network in the course of performing the above-described method steps. Furthermore, method embodiments of the present invention may execute solely upon CPU 902 or may execute over a network connection such as the Internet in conjunction with a remote CPU that shares a portion of the processing.

In addition, embodiments of the present invention further relate to computer storage products with a computer readable medium that have program code thereon for performing various computer-implemented operations. The media and program code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as application-specific integrated circuits (ASICs), programmable logic devices (PLDs) and ROM and RAM devices. Examples of program code include machine code, such as produced by a compiler, and files containing higher level code that are executed by a computer using an interpreter.

Although the foregoing invention has been described in some detail for purposes of clarity of understanding, it will be apparent that certain changes and modifications may be practiced. For instance, any suitable stored-value card capable of loading, storing and decrementing value on command may be used with the present invention. Also, any network capable of performing routing functionality between a client terminal and a load and bank server may be used. Furthermore, the security module may be a physically separate module, a card located in a terminal attached to a load server, or its functionality may be incorporated directly into a load server in hardware or software. And although the client terminal may be used to route messages between the bank server and load server, both of these servers may also communicate directly between themselves, and may even be the same computer. The specific messages shown passing between the computers are exemplary, and other types of messages may be used. A specified load request is shown, but other information may also be loaded onto a stored-value card using a security module emulation and then sent packaged as one message to the security module over a network. In addition to monetary value, other types of value such as electronic cash, checks, awards, loyalty points, benefits, etc., may be loaded onto a card, and the term "value" is intended to broadly cover all these various types. Any suitable type of encryption may be used to encrypt messages passing between the computers.

## Claims

1. A loading system for loading value over a network onto a stored-value card (5), said loading system comprising:
a bank server (860) under control by a first entity and in communication with said network, said bank server (860) arranged to debit a user account by an indicated value; and
a client terminal (204) under control by a consumer and in communication with said network, said client terminal (204) including a card reader for communicating with a stored-value card (5) and an input device for indicating a value to be debited from said user account; wherein, in use, the client terminal is effective to:
communicate with the stored-value card using the card reader;
receive an indication of a value to be debited from the user's account from the input device;
transmit to the bank server (860) a request to load the stored-value card (5);
receive from said bank server (860) a verified load value;
**characterised in that** said system comprises
a load server (862), distinct from said bank server (860), under control by a second entity and in communication with said network (202), said load server (862) including an interface for communicating with a security module (864);
further **characterised in that**, in use, the client terminal is effective to:
send a load request to the load server (862), the load request including a stored-value card signature;
receive a load command from said load server (862), the load command including a security module signature;
pass the load command to the stored-value card for verification of the security module signature and for loading said stored-value card (5) by said load value;
receive a load success message from said stored-value card, the load success message including a second stored-value card signature;
send the load success message to the load server;
receive an encrypted confirmation message from the load server; and,
forward said confirmation message to said bank server (860), whereby said bank server (860) is assured that said loading is a success.

2. A loading system according to claim 1, wherein said network (202) is an internet and said bank server (860) includes a bank web site for accepting a load request.

3. A loading system according to claim 1 or 2, wherein said client terminal (204) and said bank server (860) are at separate locations and communicate over said internet.

4. A loading system according to any preceding claim, further comprising:
a clearing and administration system for reconciling said debit of said user account with a purchase using said stored-value card (5).

5. A loading system according to any preceding claim, wherein said client terminal (204) further includes a command emulator for emulating security module commands that are sent to said stored-value card (5) and for grouping responses to said security module commands into a load request message to be sent to said load server (862), and wherein said load server (862) includes a response emulator for emulating responses from said stored-value card (5) that are sent to said security module (864).

6. A loading system according to any preceding claim, wherein said security module (864) includes a comparator for comparing a stored-valued card signature received from said stored-value card (5) with an expected signature to confirm a transaction.

7. A loading system according to any preceding claim, wherein said security module (864) is adapted to verify said stored-value card signature, thereby generating a security module signature, and to send said security module signature to said load server (862).

8. A computer-implemented method of loading a stored-value card over a network, the method being performed by a client terminal, said client terminal being under control by a consumer, and comprising the steps of:
communicating with the stored-value card using a card reader;
receiving an indication of a value to be debited from the user's account from an input device;
transmitting over a network (202) to a bank server (860) a request to load the stored-value card (5), said bank server being under control by a first entity;
receiving from said bank server (860) a verified load value;
**characterised in that** the method comprises the steps of
sending a load request to a load server (862) connected to said network (202), the load request including a stored-value card signature and the load server being distinct from the bank server and including an interface for communicating with a security module (864), said load server being under control by a second entity;
receiving a load command from said load server (862), the load command including a security module signature;
passing the load command to the stored-value card for verification of the security module signature and for loading said stored-value card (5) by said load value;
receiving a load success message from said stored-value card, the load success message including a second stored-value card signature;
sending the load success message to said load server;
receiving an encrypted confirmation message from said load server; and,
forwarding said confirmation message to said bank server (860), whereby said bank server (860) is assured that said loading is a success.

9. A method according to claim 8, wherein said network (202) is an internet over which said recited steps of said method occur, wherein said bank server (860) includes a bank web site for accepting a load request, and wherein said client terminal (204) and said bank server (860) are at separate locations.

10. A method according to claim 8 or 9, further comprising the steps of:
emulating security module commands that are sent to said stored-value card (5) associated with said client terminal (204); and
grouping responses to said security module commands into said load request so that said responses may be sent as a group to said load server (862) to reduce network traffic between said load server (862) and said client terminal (204).

11. A method according to any of claims 8 to 10, wherein said confirmation information includes an encrypted confirmation message unreadable by said client terminal (204), said method further comprising:
receiving said encrypted confirmation message from said load server (862).

12. A method according to any of claims 8 to 11, further comprising verifying, at the security module (864), said stored-value card signature, thereby generating a security module signature, and sending said security module signature to said load server (862).

## Patentansprüche

1. Aufladungssystem zum Laden eines Betrages auf eine Guthabenkarte (5) über ein Netzwerk, wobei das Aufladungssystem umfasst:
einen Bankserver (80) unter Kontrolle durch eine erste Instanz und in Kommunikation mit dem Netzwerk, wobei der Bankserver (860) dazu eingerichtet ist, von einem Benutzerkonto einen angezeigten Betrag abzubuchen; und
ein Kundenterminal (204) unter Kontrolle durch einen Verbraucher und in Kommunikation mit dem Netzwerk, wobei das Kundenterminal (204) ein Kartenlesegerät zum Kommunizieren mit einer Guthabenkarte (5) und ein Eingabegerät zum Anzeigen eines von dem Benutzerkonto abzubuchenden Betrages umfasst, wobei im Gebrauch das Kundenterminal wirksam werden kann zum:
Kommunizieren mit der Guthabenkarte unter Verwendung des Kartenlesegerätes;
Empfangen einer Anzeige eines von dem Benutzerkonto abzubuchenden Betrages von dem Eingabegerät;
Übermitteln einer Aufforderung, die Guthabenkarte (5) aufzuladen, an den Bankserver (860);
Empfangen eines überprüften Aufladungsbetrages von dem Bankserver (860);
**dadurch gekennzeichnet, dass** das System umfasst
einen Aufladungsserver (862), der verschieden von dem Bankserver (860) ist, unter Kontrolle einer zweiten Instanz und in Kommunikation mit dem Netzwerk (202), wobei der Aufladungsserver (862) eine Schnittstelle zum Kommunizieren mit einem Sicherheitsmodul (864) beinhaltet;
ferner **dadurch gekennzeichnet, dass** im Gebrauch das Kundenterminal wirksam werden kann zum:
Senden einer Aufladungs-Aufforderung zu dem Aufladungsserver (862), wobei die Aufladungs-Aufforderung ein authentifizierendes Merkmal der Guthabenkarte beinhaltet;
Empfangen eines Aufladungsbefehls von dem Aufladungsserver (862), wobei der Aufladungsbefehl ein authentifizierendes Merkmal des Sicherheitsmoduls beinhaltet;
Übergeben des Aufladungsbefehls an die Guthabenkarte zur Überprüfung des authentifizierenden Merkmals des Sicherheitsmoduls und zum Aufladen der Guthabenkarte (5) um den Aufladungsbetrag;
Empfangen einer Nachricht über den Aufladungserfolg von der Guthabenkarte, wobei die Nachricht über den Aufladungserfolg eine zweites authentifizierendes Merkmal der Guthabenkarte beinhaltet;
Senden der Nachricht über den Aufladungserfolg an den Aufladungsserver;
Empfangen einer verschlüsselten Bestätigungsnachricht von dem Aufladungsserver; und
Weiterleiten der Bestätigungsnachricht an den Bankserver (860), wodurch dem Bankserver (860) gewährleistet wird, dass die Aufladung ein Erfolg war.

2. Aufladungssystem gemäß Anspruch 1, wobei das Netzwerk (202) ein Internet ist und der Bankserver (860) eine Bank-Webseite zur Annahme einer Aufladungsaufforderung beinhaltet.

3. Aufladungssystem gemäß Anspruch 1 oder 2, wobei das Kundenterminal (204) und der Bankserver (860) sich an getrennten Standorten befinden und über das Internet miteinander kommunizieren.

4. Aufladungssystem gemäß irgendeinem vorhergehenden Anspruch, ferner umfassend:
ein Abrechnungs- und Verwaltungssystem zum Abgleichen der Abbuchung von dem Verwenderkonto mit einem Kauf unter Verwendung der Guthabenkarte (5).

5. Aufladungssystem gemäß irgendeinem vorhergehenden Anspruch, wobei das Kundenterminal (204) ferner einen Befehlsemulator zum Emulieren von Sicherheitsmodul-Befehlen beinhaltet, welche zu der Guthabenkarte (5) gesendet werden, und zum Bündeln von Antworten auf die Sicherheitsmodul-Befehle zu einer an den Aufladungsserver (862) zu sendenden Aufladungsaufforderungs-Nachricht, und wobei der Aufladungsserver (862) einen Antwortemulator zum Emulieren von Antworten der Guthabenkarte (5) beinhaltet, die zu dem Sicherheitsmodul (864) gesendet werden.

6. Aufladungssystem gemäß irgendeinem vorhergehenden Anspruch, wobei das Sicherheitsmodul (864) einen Komparator zum Vergleichen eines von der Guthabenkarte empfangenen authentifizierenden Merkmals der Guthabenkarte mit einem erwarteten authentifizierenden Merkmal beinhaltet, um eine Transaktion zu bestätigen.

7. Aufladungssystem gemäß irgendeinem vorhergehenden Anspruch, wobei das Sicherheitsmodul (864) dazu angepasst ist, das authentifizierende Merkmal der Guthabenkarte zu überprüfen, wodurch ein authentifizierendes Merkmal des Sicherheitsmoduls erzeugt wird, und das authentifizierende Merkmal des Sicherheitsmoduls an den Aufladungsserver (862) zu senden.

8. Computer-implementiertes Verfahren zum Aufladen einer Guthabenkarte über ein Netzwerk, wobei das Verfahren durch ein Kundenterminal durchgeführt wird, wobei das Kundenterminal unter Kontrolle durch einen Verbraucher ist, und umfassend die Schritte von:
Kommunizieren mit der Guthabenkarte unter Verwendung eines Kartenlesegerätes;
Empfangen einer Anzeige eines von dem Benutzerkonto abzubuchenden Betrages von einem Eingabegerät;
Übermitteln einer Aufforderung, die Guthabenkarte (5) aufzuladen, an einen Bankserver (860) über ein Netzwerk (202), wobei der Bankserver unter der Kontrolle einer ersten Instanz ist;
Empfangen eines überprüften Aufladungsbetrages von dem Bankserver (860);
**dadurch gekennzeichnet, dass** das Verfahren umfasst die Schritte von:
Senden einer Aufladungs-Aufforderung zu einem mit dem Netzwerk (202) verbundenen Aufladungsserver (862), wobei die Aufladungs-Aufforderung ein authentifizierendes Merkmal der Guthabenkarte beinhaltet und der Aufladungsserver verschieden von dem Bankserver ist und eine Schnittstelle zum Kommunizieren mit einem Sicherheitsmodul (864) beinhaltet, wobei der Aufladungserver unter der Kontrolle durch eine zweite Instanz steht;
Empfangen eines Aufladungsbefehls von dem Aufladungsserver (862), wobei der Aufladungsbefehl ein authentifizierendes Merkmal des Sicherheitsmoduls beinhaltet;
Übergeben des Aufladungsbefehls an die Guthabenkarte zur Überprüfung des authentifizierenden Merkmals des Sicherheitsmoduls und zum Aufladen der Guthabenkarte (5) um den Aufladungsbetrag;
Empfangen einer Nachricht über den Aufladungserfolg von der Guthabenkarte, wobei die Nachricht über den Aufladungserfolg eine zweites authentifizierendes Merkmal der Guthabenkarte beinhaltet;
Senden der Nachricht über den Aufladungserfolg an den Aufladungsserver;
Empfangen einer verschlüsselten Bestätigungsnachricht von dem Aufladungsserver; und
Weiterleiten der Bestätigungsnachricht an den Bankserver (860), wodurch dem Bankserver gewährleistet wird, dass die Aufladung ein Erfolg war.

9. Verfahren gemäß Anspruch 8, wobei das Netzwerk (202) ein Internet ist, über welches die genannten Schritte des Verfahrens erfolgen, wobei der Bankserver (860) eine Bank-Webseite zur Annahme einer Aufladungsaufforderung beinhaltet und wobei das Kundenterminal (204) und der Bankserver (860) sich an getrennten Orten befinden.

10. Verfahren gemäß Anspruch 8 oder 9, ferner umfassend die Schritte von:
Emulieren von Sicherheitsmodul-Befehlen, welche zu der dem Kundenterminal (204) zugewiesenen Guthabenkarte (5) gesendet werden; und
Bündeln von Antworten auf die Sicherheitsmodul-Befehle in die Aufladungsaufforderung, so dass die Antworten als eine Gruppe zu dem Aufladungsserver (862) gesendet werden können, um den Netzwerkverkehr zwischen dem Aufladungsserver (862) und dem Kundenterminal (204) zu verringern.

11. Verfahren gemäß irgendeinem der Ansprüche 8 bis 10, wobei die Bestätigungsinformation eine verschlüsselte Bestätigungsnachricht beinhaltet, die von dem Kundenterminal (204) nicht lesbar ist, wobei das Verfahren ferner umfasst:
Empfangen der verschlüsselten Bestätigungsnachricht von dem Aufladungsserver (862).

12. Verfahren gemäß irgendeinem der Ansprüche 8 bis 11, ferner umfassend das Überprüfen des authentifizierenden Merkmals der Guthabenkarte an dem Sicherheitsmodul (864), wodurch ein authentifizierendes Merkmal des Sicherheitsmoduls erzeugt wird, und Senden des authentifizierenden Merkmals des Sicherheitsmoduls zu dem Aufladungsserver (862).

## Revendications

1. Système de rechargement pour recharger une valeur, par le biais d'un réseau, sur une carte à valeur stockée (5), ledit système de rechargement comprenant :
un serveur de banque (860), qui est sous le contrôle d'une première entité et en communication avec ledit réseau, ledit serveur de banque (860) étant configuré pour débiter le compte d'un utilisateur d'une valeur indiquée ; et
un terminal client (204) qui est sous le contrôle d'un consommateur et en communication avec ledit réseau, ledit terminal client (204) comprenant un lecteur de carte pour communiquer avec une carte à valeur stockée (5) et un dispositif d'entrée pour indiquer une valeur à débiter dudit compte d'un utilisateur ; dans lequel, à l'utilisation, le terminal client a pour fonction de :
communiquer avec la carte à valeur stockée au moyen du lecteur de carte ;
recevoir une indication d'une valeur à débiter du compte d'un utilisateur, en provenance du dispositif d'entrée ;
transmettre au serveur de banque (860) une requête de recharger la carte à valeur stockée (5) ;
recevoir dudit serveur de banque (860) une valeur de rechargement vérifiée, **caractérisé en ce que** ledit système comprend :
un serveur de rechargement (862) - distinct dudit serveur de banque (860) - qui est sous le contrôle d'une deuxième entité et en communication avec ledit réseau (202), ledit serveur de rechargement (862) comprenant une interface pour communiquer avec un module de sécurité (864) ;
**caractérisé par** ailleurs en ce que, à l'utilisation, le terminal client a pour fonction de :
transmettre une requête de rechargement au serveur de rechargement (862), la requête de rechargement comprenant une signature de carte à valeur stockée ;
recevoir une commande de rechargement dudit serveur de rechargement (862), la commande de rechargement comprenant une signature de module de sécurité ;
transférer la commande de rechargement vers la carte à valeur stockée pour vérification de la signature du module de sécurité, et pour recharger ladite carte à valeur stockée (5) de ladite valeur de rechargement ;
recevoir un message de réussite de téléchargement en provenance de ladite carte à valeur stockée, le message de réussite de téléchargement comprenant une deuxième signature de carte à valeur stockée ;
transmettre le message de réussite de téléchargement au serveur de rechargement ;
recevoir un message de confirmation chiffré en provenance du serveur de rechargement ; et,
transférer ledit message de confirmation vers ledit serveur de banque (860), moyennant quoi ledit serveur de banque (860) est assuré que ledit rechargement a réussi.

2. Système de rechargement selon la revendication 1, dans lequel ledit réseau (202) est un réseau Internet, et ledit serveur de banque (860) comprend un site de banque en ligne pour accepter une requête de rechargement.

3. Système de rechargement selon la revendication 1 ou 2, dans lequel ledit terminal client (204) et ledit serveur de banque (860) se trouvent à des endroits séparés et communiquent par le biais du réseau Internet.

4. Système de rechargement selon l'une quelconque des revendications précédentes, comprenant par ailleurs : Système de gestion et de compensation pour faire concorder ledit débit dudit compte d'un utilisateur avec un achat réalisé en utilisant ladite carte à valeur stockée (5).

5. Système de rechargement selon l'une quelconque des revendications précédentes, dans lequel ledit terminal client (204) comprend par ailleurs un émulateur de commandes pour émuler des commandes de module de sécurité qui sont envoyées vers ladite carte à valeur stockée (5) et pour regrouper des réponses aux dites commandes de module de sécurité à l'intérieur d'un message de requête de rechargement à envoyer vers ledit serveur de rechargement (862), et dans lequel ledit serveur de rechargement (862) comprend un émulateur de réponses pour émuler des réponses en provenance de ladite carte à valeur stockée (5) qui sont envoyées vers ledit module de sécurité (864).

6. Système de rechargement selon l'une quelconque des revendications précédentes, dans lequel ledit module de sécurité (864) comprend un comparateur pour comparer une signature de carte à valeur stockée reçue de ladite carte à valeur stockée (5) à une signature attendue pour confirmer une transaction.

7. Système de rechargement selon l'une quelconque des revendications précédentes, dans lequel ledit module de sécurité (864) est adapté pour vérifier ladite signature de carte à valeur stockée, de façon à générer de ce fait une signature de module de sécurité, et à envoyer ladite signature de module de sécurité vers ledit serveur de rechargement (862).

8. Procédé mis en oeuvre par un ordinateur permettant de recharger une carte à valeur stockée par le biais d'un réseau, le procédé étant accompli par un terminal client, ledit terminal client étant sous le contrôle d'un consommateur, et le procédé comprenant les étapes consistant à :
communiquer avec la carte à valeur stockée au moyen d'un lecteur de carte ;
recevoir une indication d'une valeur à débiter du compte d'un utilisateur, en provenance d'un dispositif d'entrée ;
transmettre par le biais d'un réseau (202) vers un serveur de banque (860) une requête de rechargement de la carte à valeur stockée (5), ledit serveur de banque étant sous le contrôle d'une première entité ;
recevoir dudit serveur de banque (860) une valeur de rechargement vérifiée ;
**caractérisé en ce que** le procédé comprend les étapes consistant à :
envoyer une requête de rechargement vers un serveur de rechargement (862) qui est connecté au dit réseau (202), la requête de rechargement comprenant une signature de carte à valeur stockée, et le serveur de rechargement étant distinct du serveur de banque et comprenant une interface pour communiquer avec un module de sécurité (864), ledit serveur de rechargement étant sous le contrôle d'une deuxième entité ;
recevoir une commande de rechargement dudit serveur de rechargement (862), la commande de rechargement comprenant une signature de module de sécurité ;
transférer la commande de rechargement vers la carte à valeur stockée pour vérification de la signature du module de sécurité, et recharger ladite carte à valeur stockée (5) de ladite valeur de rechargement ;
recevoir un message de réussite de téléchargement en provenance de ladite carte à valeur stockée, le message de réussite de téléchargement comprenant une deuxième signature de carte à valeur stockée ;
transmettre le message de réussite de téléchargement au dit serveur de rechargement ;
recevoir un message de confirmation chiffré en provenance dudit serveur de rechargement ; et,
transférer ledit message de confirmation vers ledit serveur de banque (860), moyennant quoi ledit serveur de banque (860) est assuré que ledit rechargement a réussi.

9. Procédé selon la revendication 8, dans lequel ledit réseau (202) est un réseau Internet - sur lequel lesdites étapes décrites dudit procédé sont accomplies - dans lequel ledit serveur de banque (860) comprend un site de banque en ligne pour accepter une requête de rechargement, et dans lequel ledit terminal client (204) et ledit serveur de banque (860) se trouvent à des endroits séparés.

10. Procédé selon la revendication 8 ou 9, comprenant par ailleurs les étapes consistant à :
émuler des commandes de module de sécurité qui sont envoyées vers ladite carte à valeur stockée (5) associée au dit terminal client (204) ; et
regrouper des réponses aux dites commandes de module de sécurité à l'intérieur de ladite requête de rechargement de telle sorte que lesdites réponses puissent être envoyées de façon groupée vers ledit serveur de rechargement (862), de façon à réduire à un trafic de réseau entre ledit serveur de rechargement (862) et ledit terminal client (204).

11. Procédé selon l'une quelconque des revendications 8 à 10, dans lequel lesdites informations de confirmation comprennent un message de confirmation chiffré qui ne peut pas être lu par ledit terminal client (204), ledit procédé comprenant par ailleurs l'étape consistant à :
recevoir ledit message de confirmation chiffré en provenance dudit serveur de rechargement (862).

12. Procédé selon l'une quelconque des revendications 8 à 11, comprenant par ailleurs l'étape consistant à vérifier - au niveau du module de sécurité (864) - ladite signature de carte à valeur stockée, de façon à générer de ce fait une signature de module de sécurité, et à envoyer ladite signature de module de sécurité vers ledit serveur de rechargement (862).
